# EUROPEAN PATENT SPECIFICATION

(11) **EP 3 312 486 B1**
(45) Date of publication and mention of the grant of the patent: **05.05.2021**
(21) Application number: 16306384.5
(22) Date of filing: 21.10.2016
(51) Int. Cl.: F16L 1/23, B63B 35/03, B65G 23/14, B65H 51/14, E21B 19/22, H02G 1/10

(54) **ADJUSTABLE TENSIONER PAD FOR A TRACK-TYPE TENSIONER AND ASSOCIATED TENSIONER**
VERSTELLBARES SPANNVORRICHTUNGSPAD FÜR EINE RAUPENSPANNVORRICHTUNG UND ZUGEHÖRIGE SPANNVORRICHTUNG
TAMPON DE TENDEUR AJUSTABLE POUR UN TENDEUR À CHENILLES ET TENDEUR ASSOCIÉ

(43) Date of publication of application: 25.04.2018
(73) Proprietor: TECHNIP N-POWER, 92400 Courbevoie (FR)
(72) Inventor: NOGUEIRA, Rodrigo de Moura, 22260-001 Rio de Janeiro, RJ (BR); LOPES DE CASTRO, Mario Augusto, 21930-135 Rio de Janeiro-RJ (BR)
(74) Representative: Lavoix

(56) References cited:
- WO-A1-2010/061280
- WO-A2-2014/174287
- GB-A- 2 299 646
- US-A- 3 638 288
- US-A- 3 669 329

## Description

The present invention relates to a tensioner pad assembly for a track-type tensioner according to the preamble of claim 1.

Such a tensioner pad assembly is known from US 3 638 288 A, which shows: a retractor having an endless train made up of a plurality of grippers. The grippers have contoured gripping faces which are contoured to grip pipes of different sizes and the degree of movement of the grippers toward and away from pipe engaging positions is selectively controlled relatively to the size of the pipe being gripped. The grippers are mounted on pivot pins at positions to either side of the center line of the piston supplying the gripping force to increase the resultant gripping force exerted by the grippers.

Track-type tensioners are especially used on offshore pipelaying, to deploy elongate articles such as pipelines, cables or umbilicals. During the deployment process, the tracks exert a stretching force on the pipe or similar article, in order to control its bending. Such tensioners are described in documents US3739971 and WO2014/174287.

In order to exert a sufficient friction force, the tracks are equipped with tensioner pads providing a concave surface, adaptable to the convex surface of the pipe.

However, a fixed tensioner pad is only adapted to a certain range of pipe diameters, compatible with its concave surface. In order to lay pipes within a large range of diameters with a same tensioner, steps of replacing all the tensioner pads of the tensioner may be necessary. Such a process is long, tedious and difficult to carry out offshore.

Document WO2014/174287 discloses adjustable pads, formed by two inclined element parted by a variable distance, depending on the diameter of the pipe. Such a device nevertheless needs the intervention of the operator on each pad, in order to adjust the distance.

The present invention aims to provide a tensioner pad assembly which is auto-adjustable to the pipe diameter.

For this purpose, the invention relates to a tensioner pad assembly according to claim 1.

According to preferred embodiments, the tensioner pad assembly may include one or more of the following features, considered alone or in any technically possible combination:
- the central surface is perpendicular to the translation axis ; and each of the first and second lateral surfaces is inclined relative to the central surface, so that a section of the contact surface perpendicularly to the first axis is substantially concave ;
- an angle between the central surface and the first or second lateral surface is comprised between 5° and 20° ;
- the tensioner pad assembly comprises an adjustment device allowing the translations of the central segment and first and second lateral segments relative to the mounting support, said translations being independent to one another;
- the adjustment device comprises a spring device associated to each of the central segment and first and second lateral segments ;
- The tensioner pad assembly comprises an adjustment device (136, 236) allowing the translations of the central segment and first and second lateral segments relative to the mounting support, said translations being dependent to each other;
- the adjustment device comprises : a segment shaft fixed to each of the central segment and lateral segments ; two support shafts and fixed to the mounting support, each segment shaft and support shaft extending parallel to the first axis ; and two elbow-shaped cranks, each crank comprising two arms fixed to each other ; a junction of the arms of each crank forming a pivot with one of the support shafts, a free end of each of the arms being in contact with one of the segment shafts ;
- a free end of each of the arms comprises an oblong hole, each of said oblong holes being fitted around one of the segment shafts ;
- an external surface of a free end of each of the arms is in contact with a segment shaft; and the adjustment device also comprises three oblong rings fixed to the mounting support, each of said oblong rings being fitted around a segment shaft ;
- the adjustment device also comprises guides able to guide a translation of the first and second lateral segments relative to the mounting support.

The invention also relates to a track for a pipe tensioner, comprising a plurality of tensioner pad assemblies as described above.

The invention also relates to a pipe tensioner comprising : a fixed structure extending along a longitudinal axis ; a plurality of tracks as described above, each track being radially mobile relative to the fixed structure ; and a radial translation apparatus associated to each track.

The invention will be easier to understand in view of the following description, provided solely as an example, and with reference to the appended drawings, wherein :
- figure 1 is a schematic, lateral view of a pipe tensioner according to a first embodiment of the invention, comprising a plurality of tensioner pad assemblies ;
- figures 2 and 3 are sectional views of a tensioner pad assembly of the pipe tensioner of figure 1, respectively in a first and in a second configuration ;
- figures 4 and 6 are perspective views of a tensioner pad assembly, according respectively to a second and to a third embodiment of the invention ; and
- figures 5 and 7 are perspective views of parts of the tensioner pad assemblies of figures 4 and 6 respectively.

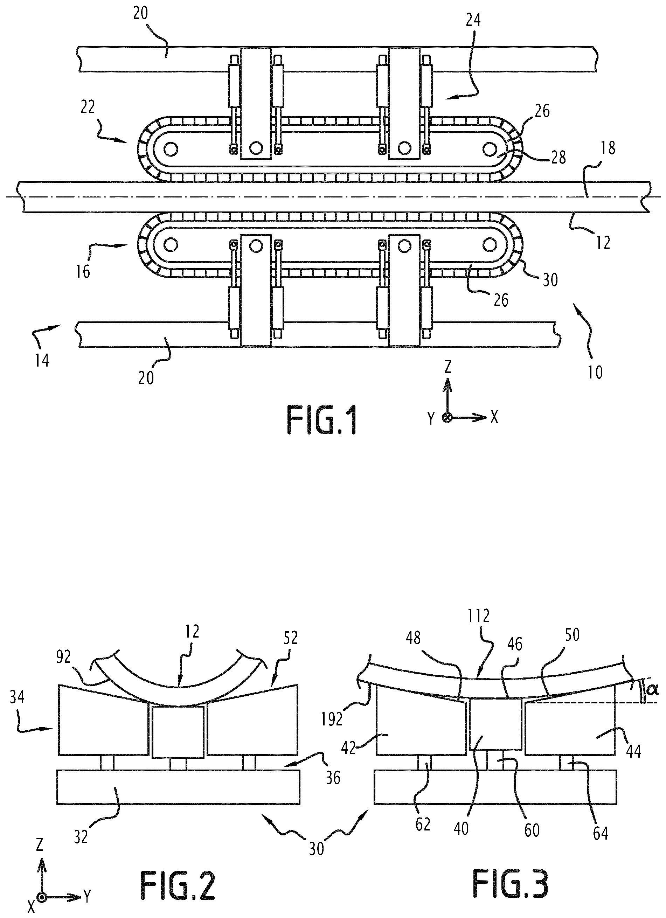

Figure 1 shows a pipe tensioner 10 according to a first embodiment of the invention. The pipe tensioner 10 is particularly designed for the deployment of a pipe 12. For example, the pipe tensioner 10 is installed on a pipelaying vessel (not shown).

The pipe tensioner 10 comprises a fixed structure 14 and a plurality of track devices 16. The fixed structure 14, intended to be assembled to a deck of said pipelaying vessel, extends along a longitudinal axis 18. The longitudinal axis 18 may be horizontal, vertical or tilted.

In the following description, an orthonormal basis (X, Y, Z) is considered, the longitudinal axis 18 being parallel to direction X.

The fixed structure 14 comprises a plurality of columns 20, parallel to and disposed around the longitudinal axis 18. Each of the track devices 16 is supported by a column 20.

The fixed structure 14 comprises at least two, and preferably four or more track devices 16, regularly disposed around the longitudinal axis 18. On the pipe tensioner 10 of figure 1, two track devices 16 are represented.

Each of the track devices 16 comprises a track 22 and a radial translation apparatus 24. The track 22 substantially extends parallel to the longitudinal axis 18. The track 22 comprises a closed loop 26, such as a chain, rotatably movable around an elongated frame 28. An external face of the closed loop 26 bears a plurality of tensioner pad assemblies 30.

The radial translation apparatus 24 of each track device 16 is connected to the frame 28 of the track 22, and to the supporting column 20. The radial translation apparatus 24 comprises pistons extending along a radial axis, said axis connecting the supporting column 20 and the longitudinal axis 18. As shown on figure 1, the track devices 16 are able to exert a radial pressure on the pipe 12, maintaining said pipe coaxial to the longitudinal axis 18, or to release said pipe 12 by retreating near the supporting columns 20.

Figures 2 and 3 represent a tensioner pad assembly 30 in two different configurations, in contact with pipes 12 and 112 of two different diameters.

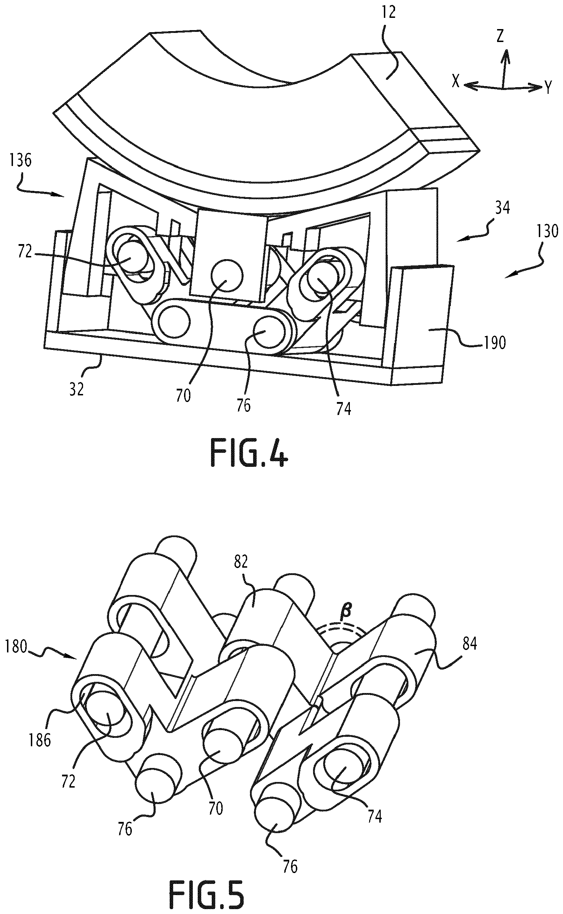

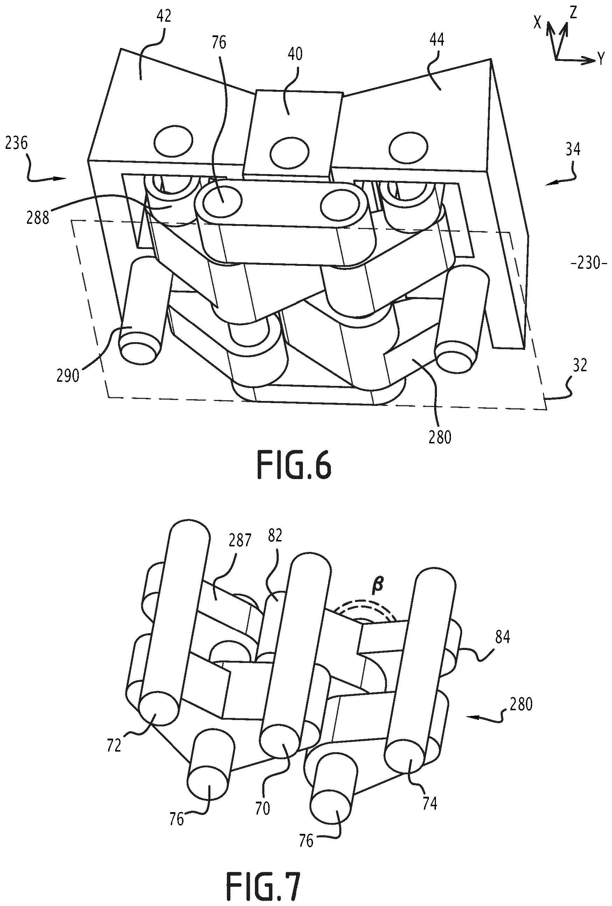

Figures 4 and 6 represent tensioner pad assemblies, respectively 130 and 230, according to a second and to a third embodiments of the invention. The tensioner pad assemblies 130 and 230 are able to replace the tensioner pad assemblies 30 of the pipe tensioner 10 of figure 1. In the following description, the tensioner pad assemblies 30, 130 and 230 are described simultaneously, the common features being designed by the same reference numbers.

The tensioner pad assembly 30, 130, 230 comprises a mounting support 32, a tensioner pad 34 and an adjustment device 36, 136, 236.

In the embodiments of figures 2, 3, 4 and 6, the mounting support 32 substantially has the shape of a plate parallel to the longitudinal axis 18. In the following description, said plate is considered to be disposed along (X, Y). One side of the mounting support 32 is able to be fixed to the closed loop 26.

The tensioner pad 34 is disposed on the other side of the plate. The tensioner pad 34 comprises a central segment 40 and a first 42 and a second 44 lateral segments, each of said segments having a cylindrical shape extending parallel to X. Each of the cylinders has a quadrilateral base.

The central segment 40 has a parallelepiped shape. The central segment 40 comprises a central surface 46, constituted by a face disposed along (X, Y) and opposed to the mounting support 32.

The lateral segments 42, 44 are on each side of the central segment 40 according to direction Y. The first 42 and second 44 lateral segments respectively comprise a first 48 and a second 50 lateral surfaces. Each of the lateral surfaces 48, 50 is plane and inclined relative to the central surface 46 by an angle α. Preferably, the angle α is comprised between 5° and 20°.

The central surface 46 and lateral surfaces 48, 50 constitute a substantially concave contact surface 52 of the tensioner pad 34. The contact surface 52 is designed for being in contact with the pipe 12, 112 in the configuration of the pipe tensioner 10 shown on figure 1.

The adjustment device 36, 136, 236 allows each of the central segment 40 and lateral segments 42, 44 to be translatable relative to the mounting support 32 along a translation axis parallel to Z.

In the embodiment of figures 2 and 3, the adjustment device 36 allows the central segment 40 and lateral segments 42, 44 to be translatable independently to one another. More precisely, the adjustment device 36 comprises three spring devices 60, 62, 64, connected to the mounting support 32 and respectively to the central segment 40, to the first lateral segment 42 and to the second lateral segment 44. The spring devices 60, 62, 64 may be hydraulic or pneumatic actuators.

Each of the spring devices 60, 62, 64 has a resting position (not shown) and is able to translate parallel to Z towards the mounting support 32, under a pressure on the central surface 46 or lateral surface 48 or 50. The first and second configurations of the tensioner pad assembly 30, shown on figures 2 and 3, correspond to different positions of the central surface 46 and lateral surfaces 48, 50 relative to the mounting support 32.

In the adjustment devices 136 of figure 4 and 236 of figure 6, the translations of the central segment 40 and lateral segments 42, 44 depend to each other. More precisely, the adjustment device 136, 236 comprises three segment shafts 70, 72, 74, extending parallel to X and respectively fixed to the central segment 40 and to each of the lateral segments 42, 44. The adjustment device 136, 236 also comprises two support shafts 76 extending parallel to X and fixed to the mounting support 32.

The adjustment device 136, 236 also comprises two elbow-shaped cranks 180, 280. Each crank comprises one or more sets of two arms 82, 84, fixed to each other. The two arms 82, 84 of a same crank 180, 280 form an angle β preferably comprised between 40° and 120°.

The cranks 180, 280 and shafts 70, 72, 74 and 76 are represented alone on figures 5 and 7.

A junction of the arms 82, 84 of each of the cranks 180, 280 forms a pivot with one of the support shafts 76.

In the embodiment of figures 4 and 5, a free end of each of the arms 82, 24 of the cranks 180 comprises an oblong hole 186. Each of the oblong holes 186 is fitted around a segment shaft 70, 72, 74. More precisely, one of the oblong holes 186 of each crank 180 is fitted around the segment shaft 70 of the central segment and the other oblong hole of the same crank is fitted around the segment shaft 72, 74 of each lateral segment 42,44.

In the embodiment of figures 6 and 7, an external surface 287 of a free end of each of the arms 82, 24 of the cranks 280 is in contact with a segment shaft 70, 72, 74. More precisely, one arm of each crank 280 is in contact with the segment shaft 70 of the central segment; the other arm of the same crank is in contact with the segment shaft 72, 74 of each lateral segment 42,44.

Moreover, as shown on figure 6, the adjustment device 236 comprises three oblong rings 288 fixed to the mounting support 32. The oblong rings 288 have an oblong section perpendicular to X, said section being elongated along Z. Each of the oblong rings 288 is fitted around a segment shaft 70, 72, 74.

The adjustment device 136, 236 also comprises guides 190, 290 able to guide a translation of the lateral segments 42, 44 relative to the mounting support 32, parallel to Z. In the embodiment of figure 4, the guides 190 comprise plates perpendicular to Y, fixed on lateral sides of the mounting support 32 and able to slide against external sides of the lateral segments 42, 44. In the embodiment of figure 6, the guides 290 comprise pins fixed to the mounting support 32 and able to slide in holes of the lateral segments 42, 44.

Preferably, the adjustment devices 136, 236, in particular the shafts and cranks, are confined in a closed compartment filled with a lubricant.

An operating of the tensioner pad assembly 30 of figures 2 and 3 is as follows : as a first pipe 12, with an external surface 92 of a first diameter, is brought into contact with the contact surface 52, the spring devices 60, 62, 64 translate parallel to Z towards the mounting support 32, until each of the central surface 46 and lateral surfaces 48, 50 are in contact with a different generatrix of the external surface 92. The tensioner pad assembly 30 is in the first configuration shown on figure 2.

Preferably, the spring devices 60, 62, 64 are calibrated so that a same pressure is exerted by each of the surfaces 46, 48, 50 on a different generatrix of the external surface 92.

As the pipe 12 is parted from the tensioner pad assembly 30, the spring devices 60, 62, 64 return to their resting position.

A second pipe 112, with an external surface 192 of a second, bigger diameter, is then brought into contact with the contact surface 52.

In the same manner as above, the spring devices 60, 62, 64 translate parallel to Z until the external surface 192 of the pipe is in contact with each of the central surface 46 and lateral surfaces 48, 50. The tensioner pad assembly 30 is in the second configuration shown on figure 3.

As the second diameter is bigger than the first diameter, a space between the central surface 46 and the mounting support 32 is larger in the second configuration than in the first configuration. On the contrary, the lateral surfaces 48, 50 are closer to the mounting support 32 in the second configuration than in the first configuration. Therefore, the substantial concavity defined by the contact surface 52 has a bigger radius in the second configuration than in the first configuration.

An operating of the tensioner pad assemblies 130, 230 of figures 4 and 6 is as follows : a pipe 12 is brought into contact with the contact surface 52 and exerts a pressure on said surface. Said pressure makes the cranks 180, 280 pivot around the support shafts 76. The oblong holes 186 or oblong rings 288, and the guides 190, 290, associate the rotating movements to a translating movement parallel to Z of the central surface 46 and lateral surfaces 48, 50. When each of said surfaces is in contact with the pipe 12, a stable equilibrium of the adjustment device 136, 236 is reached, with a same pressure is exerted by each of the surfaces 46, 48, 50 on a different generatrix of the external surface 92.

As the pipe 12 is replaced by another pipe 112 with a different diameter, the adjustment device 136, 236 reacts to the pressure of the pipe to reach a new equilibrium configuration.

Therefore, the contact surface 52 of the tensioner pad assemblies 30, 130, 230 is able to automatically adapt to the shape of the pipes 12, 112 within a large range of diameters.

An operating of the tensioner 10 for the laying of a pipe 12 will now be described. As the track devices 16 are in a retracted position, a pipe 12 is brought into contact with the tensioner pad assemblies 30 of at least one of the tracks 22. All of the translation apparatuses 24 are then radially translated towards the longitudinal axis 18 until all of the tracks exert a radial pressure on the pipe 12. Upon said pressure, the tensioner pad assemblies 30 adjust to the diameter of the pipe 12, as described above. The tensioner 10 is then in the configuration of figure 1, the pipe 12 being maintained coaxial to the longitudinal axis 18.

Then, the movement of the closed loop 26 of each track 22 around its frame 28 is actuated. The friction of the tensioner pad assemblies 30 on the pipe 12 allows said pipe to be displaced along with said tensioner pad assemblies, in one or another direction of the longitudinal axis 18.

## Claims

1. A tensioner pad assembly (30, 130, 230) for a track-type tensioner, comprising:
- a mounting support (32) ; and
- a tensioner pad (34), mobile relative to the mounting support, said tensioner pad comprising a contact surface (52) extending parallel to a first axis (X), said contact surface being able to get into contact with a pipe-like device (12, 112) extending parallel to said first axis ;
wherein the tensioner pad comprises a central segment (40) and a first (42) and a second (44) lateral segments, said first and second lateral segments being on each side of the central segment according to a second axis (Y), perpendicular to the first axis,
said central segment and first and second lateral segments comprising respectively a central surface (46) and a first (48) and a second (50) lateral surfaces, said central surface and first and second lateral surfaces constituting the contact surface of the tensioner pad,
**characterized in that** each of said central surface (46) and first (48) and second (50) lateral surfaces is planar, the central surface being parallel to the first (X) and second (Y) axes, the first and second lateral surfaces being inclined relative to the central surface,
each of said central segment and first and second lateral segments being translatable (36, 136, 236) relative to the mounting support along a translation axis (Z), perpendicular to the first and second axes, so that the central surface (46) is translatable relative to the first (48) and second (50) lateral surfaces along said translation axis.

2. A tensioner pad assembly according to claim 1, wherein :
- the central surface (46) is perpendicular to the translation axis (Z) ; and
- each of the first and second lateral surfaces (48, 50) is inclined (α) relative to the central surface, so that a section of the contact surface (52) perpendicularly to the first axis is substantially concave.

3. A tensioner pad assembly according to claim 2, wherein an angle (α) between the central surface and the first or second lateral surface is comprised between 5° and 20°.

4. A tensioner pad assembly (30) according to one of the preceding claims, comprising an adjustment device (36, 136, 236) allowing the translations of the central segment (40) and first and second lateral segments (42, 44) relative to the mounting support (32), said translations being independent to one another.

5. A tensioner pad assembly according to claim 4, wherein the adjustment device (36) comprises a spring device (60, 62, 64) associated to each of the central segment (40) and first and second lateral segments (42, 44).

6. A tensioner pad assembly (130, 230) according to one of claims 1 to 3, comprising an adjustment device (136, 236) allowing the translations of the central segment (40) and first and second lateral segments (42, 44) relative to the mounting support (32), said translations being dependent to each other.

7. A tensioner pad assembly according to claim 6, wherein the adjustment device (136, 236) comprises :
- a segment shaft (70, 72, 74) fixed to each of the central segment (40) and lateral segments (42, 44) ;
- two support shafts (76) fixed to the mounting support (32) ; each segment shaft and support shaft extending parallel to the first axis ; and
- two elbow-shaped cranks (180, 280), each crank comprising two arms (82, 84) fixed to each other;
a junction of the arms (82, 84) of each crank forming a pivot with one of the support shafts (76), a free end of each of the arms (82, 24) being in contact with one of the segment shafts (70, 72, 74).

8. A tensioner pad assembly (130) according to claim 7, wherein a free end of each of the arms (82, 24) comprises an oblong hole (86), each of said oblong holes being fitted around one of the segment shafts (70, 72, 74).

9. A tensioner pad assembly (230) according to claim 7, wherein :
- an external surface (287) of a free end of each of the arms (82, 24) is in contact with a segment shaft (70, 72, 74) ; and
- the adjustment device (236) also comprises three oblong rings (288) fixed to the mounting support (32), each of said oblong rings being fitted around a segment shaft (70, 72, 74).

10. A tensioner pad assembly (130, 230) according to one of claims 6 to 9, wherein the adjustment device (136, 236) also comprises guides (190, 290) able to guide a translation of the first and second lateral segments (42, 44) relative to the mounting support (32).

11. A track (22) for a pipe tensioner (10), said track comprising a plurality of tensioner pad assemblies (30, 130, 230) according to one of the preceding claims.

12. A pipe tensioner comprising
- a fixed structure (14) extending along a longitudinal axis (18) ;
- a plurality of tracks (22) according to claim 11, each track being radially mobile relative to the fixed structure ; and
- a radial translation apparatus (24) associated to each track.

## Patentansprüche

1. Eine Spannpolsteranordnung (30, 130, 230) für eine Spanneinrichtung vom Gleiskettentyp,
- einen Montageträger (32), und
- ein Spannpolster (34), welches relativ zum Montageträger (32) bewegbar ist, wobei das Spannpolster eine Kontaktfläche (52) aufweist, welche sich parallel zu einer ersten Achse (X) erstreckt, wobei die Kontaktfläche dazu imstande ist, mit einer rohrförmigen Einrichtung (12, 112), welche sich parallel zur ersten Achse erstreckt, in Kontakt zu kommen,
wobei das Spannpolster ein zentrales Segment (40) und ein erstes (42) und ein zweite (44) seitliches Segment aufweist, wobei das erste und das zweite seitliche Segment auf jeder Seite des zentralen Segments gemäß einer zweiten Achse (Y), welche senkrecht zur ersten Achse ist, vorliegen,
wobei das zentrale Segment und das erste und das zweite seitliche Segment jeweils zugeordnet eine zentrale Fläche (46) und eine erste (48) und eine zweite (50) seitliche Fläche aufweisen, wobei die zentrale Fläche und die erste und die zweite seitliche Fläche die Kontaktfläche des Spannpolsters bilden,
**gekennzeichnet dadurch, dass**
jede von der zentralen Fläche (46) und der ersten (48) und der zweiten (50) seitlichen Fläche planar ist, wobei die zentrale Fläche parallel zur ersten (X) und zur zweiten (Y) Achse ist, wobei die erste und die zweite seitliche Fläche bezüglich der zentralen Fläche geneigt ist,
wobei jedes von dem zentralen Segment und dem ersten und dem zweiten seitlichen Segment translatorisch (36, 136, 236) relativ zum Montageträger entlang einer Translationsachse (Z), welche senkrecht zur ersten und zur zweiten Achse ist, bewegbar sind, so dass die zentrale Fläche (46) relativ zur ersten (48) und zweiten (50) seitlichen Fläche entlang der Translationsachse (Z) translatorisch bewegbar ist.

2. Eine Spannpolsteranordnung gemäß Anspruch 1, wobei:
- die zentrale Fläche (46) senkrecht zur Translationsachse (Z) ist, und
- jede von der ersten (48) und der zweiten (50) seitlichen Fläche bezüglich der zentralen Fläche geneigt (α) ist, so dass ein zur ersten Achse senkrechter Querschnitt der Kontaktfläche (52) im Wesentlichen konkav ist.

3. Eine Spannpolsteranordnung gemäß Anspruch 2, wobei ein Winkel (α) zwischen der zentralen Fläche und der ersten oder der zweiten seitlichen Fläche zwischen 5° und 20° liegt.

4. Eine Spannpolsteranordnung gemäß einem der vorhergehenden Ansprüche, aufweisend eine Einstellvorrichtung (36, 136, 236), welche die Translationen des zentralen Segments (40) und des ersten und des zweiten seitlichen Segments (42, 44) bezüglich des Montageträgers (32) erlaubt, wobei die Translationen voneinander unabhängig sind.

5. Eine Spannpolsteranordnung gemäß Anspruch 4, wobei die Einstellvorrichtung (36) eine Federeinrichtung (60, 62, 64), welche mit jedem von dem zentralen Segment (40) und dem ersten und dem zweiten seitlichen Segment (42, 44) im Zusammenhang steht, aufweist.

6. Eine Spannpolsteranordnung gemäß einem der Ansprüche 1 bis 3, aufweisend eine Einstellvorrichtung (136, 236), welche die Translationen des zentralen Segments (40) und des ersten und des zweiten seitlichen Segments (42, 44) bezüglich des Montageträgers (32) erlaubt, wobei die Translationen voneinander abhängig sind.

7. Eine Spannpolsteranordnung gemäß Anspruch 6, wobei die Einstellvorrichtung (136, 236) aufweist:
- einen Segmentschaft (70, 72, 74), welcher an jedem von dem zentralen Segment (40) und dem ersten und dem zweiten seitlichen Segment (42, 44) befestigt ist,
- zwei Stützschäfte (76), welcher an dem Montageträger (32) befestigt sind,
wobei jeder Segmentschaft und Stützschaft sich parallel zur ersten Achse erstreckt, und
- zwei winkelförmige Kurbeln (180, 280), wobei jede Kurbel zwei aneinander befestigte Arme (82, 84) aufweist,
wobei eine Verbindungstelle der Arme (82, 84) jeder Kurbel ein Gelenk mit einem der Stützschäfte (76) bildet, wobei ein freies Ende eines jeden der Arme (82, 84) in Kontakt mit einem der Segmentschäfte (70, 72, 74) steht.

8. Eine Spannpolsteranordnung gemäß Anspruch 7, wobei ein freies Ende eines jeden der Arme (82, 84) ein Langloch (86) aufweist, wobei jedes der Langlöcher um einen der Segmentschäfte (70, 72, 74) herum angebracht ist.

9. Eine Spannpolsteranordnung gemäß Anspruch 7, wobei:
- eine äußere Fläche (287) eines freien Endes eines jeden der Arme (82, 84) in Kontakt mit einem Segmentschaft (70, 72, 74) steht, und
die Einstellvorrichtung (236) ebenfalls drei längliche Ringe (288) aufweist, welche an dem Montageträger (32) befestigt sind, wobei jeder der länglichen Ringe (288) um einen der Segmentschäfte (70, 72, 74) herum angebracht ist.

10. Eine Spannpolsteranordnung gemäß einem der Ansprüche 6 bis 9, wobei die Einstellvorrichtung (136, 236) ferner Führungen (190, 290) aufweist, welche dazu imstande sind, eine Translation des ersten und des zweiten seitlichen Segments (42, 44) relativ zum Montageträger (32) zu führen.

11. Eine Gleiskette (22) für eine Rohrspanneinrichtung (10), wobei jede Gleiskette eine Mehrzahl von Spannpolsteranordnungen (30, 130, 230) gemäß einem der vorhergehenden Ansprüche aufweist.

12. Eine Rohrspanneinrichtung, welche aufweist
- eine feste Struktur (14), welche sich entlang einer Längsachse (18) erstreckt,
- eine Mehrzahl von Gleisketten (22) gemäß Anspruch 11, wobei jede Gleiskette relativ zu der festen Struktur radial bewegbar ist, und
- eine Radialtranslationsvorrichtung (24), welche mit jeder Gleiskette im Zusammenhang steht.

## Revendications

1. Ensemble de tampon de tendeur (30, 130, 230) pour un tendeur de type à chenilles comprenant :
un support de montage (32) ; et
un tampon de tendeur (34), mobile par rapport au support de montage, ledit tampon de tendeur comprenant une surface de contact (52) s'étendant parallèlement à un premier axe (X), ladite surface de contact pouvant être en contact avec un dispositif en forme de tuyau (12, 112) s'étendant parallèlement audit premier axe ;
dans lequel le tampon de tendeur comprend un segment central (40) et un premier (42) et un second (44) segment latéral, lesdits premier et second segments latéraux étant de chaque côté du segment central selon un second axe (Y), perpendiculaire au premier axe,
ledit segment central et les premier et second segments latéraux comprenant respectivement une surface centrale (46) et une première (48) et une seconde (50) surface latérale, ladite surface centrale et les première et seconde surfaces latérales constituant la surface de contact du tampon de tendeur,
**caractérisé en ce que** :
chacune parmi ladite surface centrale (46) et les première (48) et seconde (50) surfaces latérales est plane, la surface centrale étant parallèle aux premier (X) et second (Y) axes, les première et seconde surfaces latérales étant inclinées par rapport à la surface centrale,
chacun parmi ledit segment central et les premier et second segments latéraux pouvant effectuer une translation (36, 136, 236) par rapport au support de montage le long d'un axe de translation (Z), perpendiculaire aux premier et second axes, de sorte que la surface centrale (46) peut effectuer un mouvement de translation par rapport aux première (48) et seconde (50) surfaces latérales le long dudit axe de translation.

2. Ensemble de tampon de tendeur selon la revendication 1, dans lequel :
la surface centrale (46) est perpendiculaire à l'axe de translation (Z) ; et
chacune des première et seconde surfaces latérales (48, 50) est inclinée (α) par rapport à la surface centrale, de sorte qu'une section de la surface de contact (52) est sensiblement concave, perpendiculairement au premier axe.

3. Ensemble de tampon de tendeur selon la revendication 2, dans lequel un angle (α) entre la surface centrale et la première ou seconde surface latérale est compris entre 5° et 20°.

4. Ensemble de tampon de tendeur (30) selon l'une des revendications précédentes, comprenant un dispositif d'ajustement (36, 136, 236) permettant les translations du segment central (40) et des premier et second segments latéraux (42, 44) par rapport au support de montage (32), lesdites translations étant indépendantes les unes des autres.

5. Ensemble de tampon de tendeur selon la revendication 4, dans lequel le dispositif d'ajustement (36) comprend un dispositif de ressort (60, 62, 64) associé à chacun parmi le segment central (40) et les premier et second segments latéraux (42, 44).

6. Ensemble de tampon de tendeur (130, 230) selon l'une des revendications 1 à 3, comprenant un dispositif d'ajustement (136, 236) permettant les translations du segment central (40) et des premier et second segments latéraux (42, 44) par rapport au support de montage (32), lesdites translations étant dépendantes les unes des autres.

7. Ensemble de tampon de tendeur selon la revendication 6, dans lequel le dispositif d'ajustement (136, 236) comprend :
un arbre de segment (70, 72, 74) fixé à chacun parmi le segment central (40) et les segments latéraux (42, 44) ;
deux arbres de support (76) fixés sur le support de montage (32) ;
chaque arbre de segment et arbre de support s'étendant parallèlement au premier axe ; et
deux manivelles en forme de coude (180, 280), chaque manivelle comprenant deux bras (82, 84) fixés entre eux ;
une jonction des bras (82, 84) de chaque manivelle formant un pivot avec l'un des arbres de support (76), une extrémité libre de chacun des bras (82, 24) étant en contact avec l'un des arbres de segment (70, 72, 74).

8. Ensemble de tampon de tendeur (130) selon la revendication 7, dans lequel une extrémité libre de chacun des bras (82, 24) comprend un trou oblong (86), chacun desdits trous oblongs étant monté autour de l'un des arbres de segment (70, 72, 74).

9. Ensemble de tampon de tendeur (230) selon la revendication 7, dans lequel :
une surface externe (287) d'une extrémité libre de chacun des bras (82, 24) est en contact avec un arbre de segment (70, 72, 74) ; et
le dispositif d'ajustement (236) comprend également trois bagues oblongues (288) fixées au support de montage (32), chacune desdites bagues oblongues étant montée autour d'un arbre de segment (70, 72, 74).

10. Ensemble de tampon de tendeur (130, 230) selon l'une des revendications 6 à 9, dans lequel le dispositif d'ajustement (136, 236) comprend également des guides (190, 290) pouvant guider une translation des premier et second segments latéraux (42, 44) par rapport au support de montage (32).

11. Chenille (22) pour un tendeur de tuyau (10), ladite chenille comprenant une pluralité d'ensembles de tampon de tendeur (30, 130, 230) selon l'une des revendications précédentes.

12. Tendeur de tuyau comprenant :
une structure fixe (14) s'étendant le long d'un axe longitudinal (18) ;
une pluralité de chenilles (22) selon la revendication 11, chaque chenille étant radialement mobile par rapport à la structure fixe ; et
un appareil de translation radiale (24) associé à chaque chenille.
